# EUROPEAN PATENT APPLICATION

(11) **EP 4 324 801 A1**
(43) Date of publication of application: **21.02.2024**
(21) Application number: 22190424.6
(22) Date of filing: 15.08.2022
(51) Int. Cl.: C04B 12/00, C04B 18/167, C04B 28/26

(54) **ALKALI ACTIVATED BINDER FROM WASTE CONCRETE**

(71) Applicant: Heidelberg Materials AG, 69120 Heidelberg (DE)
(72) Inventor: SCHADE, Tim, 69120 Heidelberg (DE); ZAJAC, Maciej, 69120 Heidelberg (DE); SKOCEK, Jan, 69120 Heidelberg (DE)
(74) Representative: Zellentin & Partner mbB Patentanwälte

(57) **Abstract**

Alkali activated binder comprising carbonated recycled concrete paste as silica and alumina source material and an alkali silicate with a modulus of up to 2.5 as activator, method for manufacturing it comprising the steps providing recycled concrete paste from waste concrete, carbonating the recycled concrete paste to a carbonation degree of at least 5 % by weight of the carbonatable components, and mixing the carbonated recycled concrete paste as silica and alumina source material with an alkali silicate with a modulus of up to 2.5 as activator to provide the alkali activated binder, as well as use of the binder for manufacturing building materials.

## Description

The present invention relates to alkali activated binders made from waste concrete, their manufacturing and use for making building materials.

Resources are becoming increasingly rare, and the cement industry is looking for ways to recycle concrete and to use it again in or as a binder. Utilization of recycled concrete aggregates helps to achieve higher sustainability and preserves the resources of the natural aggregates. In the field of standardisation, recycled concrete paste (abbreviated RCP herein) is already receiving attention as cement component in the currently discussed prEN 197-6 with the abbreviation "F". However, the application of the RCP is limited because of potential inappropriate properties like high water demand. To improve the properties, enforced carbonation of the fine fraction (abbreviated RCF) is applied. The carbonation of recycled concrete has not only potential to bind a significant amount of CO₂ but can also improve the properties of the recycled concrete paste. This in turn will allow to use the carbonated recycled concrete paste (abbreviated cRCP) as valuable supplementary cementitious material (abbreviated SCM) since after the carbonation cRCP has appreciable pozzolanic properties. However, using cRCP as SCM alone cannot reduce the CO₂ footprint sufficiently.

Another possibility for CO₂-saving binders are the so-called alkali activated binders which have been known for a considerable time. Generally, they are inorganic binders synthesized from source materials rich in silicates and aluminates. Like the classical cements hardening by hydraulic reaction, they can be mixed to a pourable paste. However, the strength developing process results from a chemical reaction of silica and alumina under alkaline conditions and the hardened product is an amorphous three-dimensional crosslinked aluminosilicate polymer structure. Due to this, they are often designated geopolymers, but this designation should only be used for alkali activated binders with low CaO in the source material.

In order to obtain the three-dimensional crosslinked aluminosilicate polymer structure, the silicates and aluminates have to be provided by an appropriate choice of raw materials. Common are e.g., siliceous fly ash, calcareous fly ash, granulated blast furnace slag, silica fume, and kaolinite. The reactivity of the raw materials, that significantly influences the final performance of the binder, originates from intrinsic material properties, such as volume fraction of reactive glassy phase, chemical composition of glassy phase, free lime content, unburned carbon and reactive surface. A high volume fraction of glassy phase is beneficial for the binder reactivity due to its high solubility. Additionally, the chemical composition determines the reactivity: The higher the CaO content, the higher is the reactivity. Un-burned carbon increases the demand for activator and water, which negatively influences the binder performance and costs. Finally, the higher the reactive surface, the higher is the solubility of the source material.

The activator provides high pH conditions in order to corrode the glassy structures of the alumino-silicates in the source material. Additionally, it can contribute silica and alkali oxide supporting the formation of the hardened three-dimensional crosslinked aluminosilicate polymer structure. The activator can be composed of different compounds, often mixtures are used:
- alkali and/or alkaline earth metal silicates, e.g., sodium or potassium silicate, sodium metasilicate anhydrous or pentahydrate
- alkali and/or alkaline earth metal hydroxides, e.g., sodium hydroxide, calcium hydroxide, potassium hydroxide
- alkali and/or alkaline earth metal carbonates, e.g., sodium carbonate
- Portland cement.
The alkaline activator can be added as a liquid or as a solid compound. In the solid state the activator is preferably ground together with the alumino-silicate sources in order to enhance reactivity. In many cases a simple mixing of the dry components is sufficient.

When source materials like ground granulated blast-furnace slag (abbreviated GGBS) and calcareous fly ash are used which contain high amounts of CaO, hydration processes comparable to classical cements are initiated in alkali activated binders based on them. Besides the three-dimensional crosslinked aluminosilicate polymer structure, inter alia calcium silicate hydrates and calcium aluminate hydrates or calcium silicate aluminate hydrates are formed. The water consuming hydration process increases the pH level of the pore solution and consequently the rate of dissolution. Thus, the presence of calcium contributes to the mechanical strength of the resulting hardened matrix not only by forming C-S-H, C-A-H and C-S-A-H but also by enhancing the polymerization process.

The mix design of alkali activated binders is complex, several key material parameters have to be considered, namely the type of source material (high/low CaO), the activator content and the SiO₂/M₂O-ratio (M = alkali metal ion) of the activator, called modulus. Additionally, the water/binder ratio and curing temperature have a substantial influence.

A drawback of alkali activated binders from fly ash or GGBS is the need of high quality SCM as source material. Using those for alkali activated binders limits the potential to produce composite cements characterized by a high clinker replacement ratio from them. Natural source materials like kaolinite being finite and demanded for other uses are also no solution. Therefore, other source materials are desirable, ideally waste materials without profitable use or available in higher amounts than can be used.

One such material is waste concrete. Its use as source material for alkali activated binders has been considered e.g., in Z. Tang et al., "Advanced progress in recycling municipal and construction solid wastes for manufacturing sustainable construction materials", Resources, Conservation & Recycling X 6 (2020) 10036, and references cited therein. Thereby the available finite resources of fly ash, GGBS and kaolinite are saved, and the vast amounts of concrete waste find a useful application. However, various and deviating recommendations are found in the prior art to achieve binders providing useful strength, like blending the waste concrete with other source materials, using a combination of alkali hydroxide and water glass as activator, and curing at raised temperature. Those proposals fail to provide commercially useful products so far. Therefore, the object remains to find suitable binders able to replace Portland cement and composite cements to reduce the CO₂ footprint of construction and especially to provide useful alkali activated binders.

It was now surprisingly found that carbonated recycled concrete paste shows a high reactivity when alkali silicates with a modulus of up to 2.5 are used as activator. Such alkali activated binders allow a full replacement of classical cement from clinker and consequently a high CO₂-reduction is possible.

Thus, the above-mentioned object is solved by alkali activated binders comprising carbonated recycled concrete paste as silica and alumina source material and an alkali silicate with a modulus of up to 2.5 as activator. The object is also solved by manufacturing an alkali activated binder from waste concrete comprising the steps: providing recycled concrete paste from waste concrete, carbonating the recycled concrete paste to a carbonation degree of at least 5 % by weight of the contained carbonatable components, and mixing the carbonated recycled concrete paste as silica and alumina source material with an alkali silicate with a modulus of up to 2.5 as activator to provide the alkali activated binder. The problem is further solved by using the alkali activated binders comprising carbonated recycled concrete paste as silica and alumina source material and an alkali silicate with a modulus of up to 2.5 as activator for manufacturing building materials.

The use of carbonated recycled concrete paste as silica and alumina source material and activation with alkali silicate allows to manufacture alkali activated binders characterized by a very low CO₂ footprint due to complete clinker replacement, a high content of recycled material, a high material efficiency and a performance comparable to or exceeding existing products. Activation of cRCP with an alkali silicate having a modulus above 2.5 or with an alkali hydroxide or carbonate was not successful.

The present invention relies on waste concrete obtained as known per se to provide the silica and alumina source material for (making) the alkali activated binder. Waste concrete covers all materials that occur in the use of cement, binder and hydraulically hardening building materials. One typical example is concrete demolition waste. Further examples are remains from hydraulically hardening building materials, like concrete and mortar prepared and then superfluous, and solid parts in the waste water from cleaning devices for concreting, like concrete trucks, mortar mixers, and moulds for precast concrete parts. Treatment of the demolition waste usually comprises crushing, extracting foreign materials (e.g., wood, metal, plastic, etc.), grinding and sieving/classifying to separate the coarse fraction comprising the aggregate from the fine fraction comprising RCP and fine aggregate as well as comminuted aggregate particles. It is also possible to use concrete waste like residues in the washing water from cleaning concrete mixing devices and tools for placing concrete as well as discarded paste. Here, treatment may comprise concentrating an aqueous suspension, e.g., by filtering. The exact distribution and composition of the RCP depends on the waste and the conditions used in the treatment.

A preferred waste concrete is concrete demolition waste. Concrete demolition waste designates the crushed material obtained during demolition of concrete containing structures like buildings and road surfaces from which the foreign materials like wood, metal parts, brick parts, and plastic, have been substantially completely removed. The fraction with a d₁₀ ≥ 0.1 mm, preferably a d₁₀ ≥ 1 mm, most preferred a d₁₀ ≥ 2 mm, and a d₉₀ ≤ 100 mm, preferably a d₉₀ ≤ 50 mm, most preferred a d₉₀ ≤ 32 mm, resulting from concrete demolishing is useful.

In one embodiment only the fine fraction is used. Recycled concrete fines (abbreviated RCF) designates the material obtained after crushing concrete demolition waste and separating the particles reusable as coarse aggregate (e.g., d₉₀ ≥ 4 mm or ≥ 8 mm or ≥ 16 mm and usually designated recycled aggregate) and, if applicable, any foreign matter contained. The exact composition and particle size distribution of the recycled concrete fines depends on the original binder and composition used in the concrete and on the demolishing and grinding procedures applied. Usually, the original aggregate is separated as much as possible and the RCF contain mostly the ground hardened binder paste together with fine sand/aggregates. Typically, RCP is present in amounts of 30 to 80 wt.-% of the total RCF weight.

The waste concrete, either only the fines or also fractions with larger size limit, can be carbonated either by wet, semi dry or dry methods as known per se. Additionally, naturally carbonated recycled concrete paste can be used. Carbonation or carbonatization means a reaction with carbon dioxide, which can be supplied as gas, solution or solid, forming carbonates, possibly also hydrogen carbonates or other compounds comprising the CO₃²⁻ ion. The terms carbonation and carbonatization are used synonymously. The carbonation degree is at least 5 % by weight with respect to the total amount of carbonatable phases in the fresh concrete waste material, preferably at least 10 % by weight and most preferred at least 15 % by weight. Here, fresh concrete waste material denotes the concrete waste directly after crushing the demolition waste or the discarded cement/concrete received or the suspension obtained during cleaning concreting equipment. With other words, the material before carbonation begins, wherein carbonation includes the natural carbonation during storage of the fresh waste concrete. For wet carbonation the addition of additives modifying the properties of the carbonated material as also known is possible. Suitable carbonation methods are described e.g., in EP 3 498 681 A1, EP 3 581 257 A1, EP 3 656 750 A1, EP 3 750 619 A1, EP 3 778 525 A1, not yet published EP 21163464.7, and the references cited therein. The obtained carbonated recycled concrete paste can be essentially only carbonated recycled concrete paste, but it is also possible that substantial amounts of aggregate are contained.

Typically, cRCP with up to 70 % by weight fine aggregate, preferably up to 50 % by weight fine aggregate, and most preferred up to 30 % by weight fine aggregate, will be used for the alkali activated binder according to the invention and method for manufacturing it.

If desired/needed, separation of RCP, or rather RCF, and aggregate is mostly achieved by a separation according to size, e.g., sieving, classifying, filtering, or by centrifugation. Detaching RCP from the aggregate can be enhanced by simultaneous application of attrition forces and carbonation as described e.g., in US 2015/0210594 A1, US 2016/0046532 A1 and EP 3 744 700 A1, and/or by electric pulse fragmentation techniques as described in not yet published EP21188485.3.

Alternatively, fine or fine and coarse aggregate can be left together with the carbonated RCP so that less or no aggregate has to be added during use of the alkali activated binder for making building materials. It is also possible to use a slurry of carbonated RCP obtained as described e.g., in WO 2021/074003 A1. In this case the activator is added directly for use.

The particle size distribution of the carbonated recycled concrete paste measured by laser diffraction spectrometry acc. to ISO 13320 preferably has a d₉₀ < 250 µm, more preferred a d₉₀ < 200 µm and most preferred a d₉₀ < 150 µm.

Carbonated RCP is a source material with high CaO content, so the alkali activated binders according to the invention and made according to the invention harden by forming a three-dimensional crosslinked aluminosilicate polymer structure and additionally by hydraulic reaction forming inter alia calcium silicate and/or aluminate hydrates. In contrast, composite cements comprising cRCP as SCM predominantly or essentially only harden by hydraulic reaction, since they usually have inadequate conditions for the formation of relevant amounts of the three-dimensional crosslinked aluminosilicate polymers.

The alkali activated binder according to the invention or made by the method according to the invention can also contain additional silica and alumina sources. Generally all natural and synthetic materials that provide silica and alumina in amorphous form, so that the dissolution in alkaline environment and subsequent formation of the three-dimensional network can take place, are useful. Preferably, the additional silica and alumina source is one or more of fly ashes, which can be siliceous or calcareous; ground granulated blast furnace slag and other slags containing alumina and silica glassy phase; clays, especially kaolinitic clays and metakaolin; silica dust; rice husk ash; trass; and red mud. Depending on the chemical composition single materials or mixtures are used, so that the desired alumina content, silica content, other parameters like ratio Si/AI and ratio (Si+Al)/Ca can be adjusted as desired. Typically, up to 80 % by weight additional silica and alumina source can be used, preferably up to 50 % by weight, most preferred up to 25 % by weight, all with respect to the total (solid) amount of silica and alumina source.

The alkali activated binder according to the invention or made by the method according to the invention can also contain a filler, especially calcareous fillers like limestone, dolomite or mixtures thereof or siliceous fillers like quartz powder, sandstone powder, stone dust (porphyry, granite, diabase, gabbro, basalt) or mixtures thereof. Suitable amounts are ≤ 5 % by weight or ≤ 10 % by weight or ≤ 20 % by weight, with respect to the total weight of alkali activated binder.

The activator is an alkali silicate with a modulus (molar ratio SiO₂/M₂O, where M is an alkali cation) of ≤ 2.5 according to the invention. Preferably the modulus is up to 2.0 and most preferred ranges from 1.0 to 2.0. As the alkali cation sodium, potassium or lithium are preferred, most preferred is potassium. The activator can be solid or liquid. Preferably, an alkali silicate solution or an alkali silicate solution adjusted by an alkali hydroxide up to a modulus of at most 2.5 is used as the activator.

Typically, the alkali activated binder according to the invention comprises (only the solid content of the activator is taken into account into the calculation in case of liquid activators) from 60 to 99 % by weight cRCP and from 1 to 40 % by weight activator, preferably from 65 to 90 % by weight cRCP and from 10 to 35 % by weight activator, and most preferred from 65 to 80 % by weight cRCP and from 20 to 35 % by weight activator.

Instead of cRCP also cRCF, i.e., cRCP mixed with fine aggregate, can be used in the same proportion when at least 30 % by weight cRCP are contained in the cRCF. If more than 70 % by weight fine aggregate is present, the aggregate is not taken into account as cRCP. In that case, the aggregate content forms a part (or all) of the aggregate required for use of the alkali activated binder for making building materials.

Unlike Portland cement (OPC) and composite cements from OPC the range of admixtures useful in alkali activated binders is limited. However, known admixtures can be used in their known amounts. Successfully used admixtures are for example described in EP 3 296 278 A1 and the references cited therein.

Further, for using the alkali activated binder according to the invention or obtainable according to the invention for making a building material it is mixed with water and/or the liquid activator is added with or without additional water. Typically, aggregate is added as far as cRCP is not provided as a mixture with aggregate or the aggregate mixed with the cRCP is not enough and/or has not the desired sizes. Known additives, such as but not limited to fillers and pigments, can also be added in amounts known per se. The components apart from cRCP and activator and the mix design are adapted to the intended use.

Preferred building materials are concrete and mortar. For those, a water/binder weight ratio (w/b) from 0.2 to 0.6 is usually suitable, often from 0.2 to 0.5 or from 0.2 to 0.4. Alkali activated binders are usually very sensitive to even small changes in w/b, therefore, water added as part of the activator, an admixture, additive or other component of the building material is typically taken into account for the w/b.

Further, the binder according to the invention or obtainable according to the invention can be used to manufacture construction chemical products like tile adhesive and screed as building material. The specific composition of such products is normally internal knowhow of the producer. It is expected that some adaptation of the composition is needed to exchange Portland cement or composite cements based on Portland cement in a construction chemical product. However, this can easily be accomplished by one of ordinary skill in the art.

The invention will be illustrated further with reference to the examples that follow, without restricting the scope to the specific embodiments described. The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Example

Alkali activated binders were made by mixing 2 samples of carbonated recycled concrete paste and 1 sample of not carbonated recycled concrete paste as a silica and alumina source material with 4 different activators. RCP and carbonated RCP were obtained as industrial products, designated RCP and cRCP, respectively. One sample, designated cRCP_{syn}, was obtained by carbonation of the RCP in the laboratory. The chemical and phase compositions of RCP, cRCP and cRCP_{syn} are shown in tables 1a and 1b. LOI 1050 °C means loss on ignition at 1050 °C.

**Table 1a**

| **XRF** | **RCP** | **cRCP** | **cRCPsyn** |
|---|---|---|---|
| LOI 1050 °C | 18.5 | 21.7 | 30.3 |
| SiO₂ | 43.5 | 41.5 | 23.5 |
| Al₂O₃ | 6.6 | 6.4 | 3.2 |
| TiO₂ | 0.4 | 0.4 | 0.2 |
| MnO | 0.1 | 0.1 | 0.0 |
| Fe₂O₃ | 2.2 | 2.2 | 1.9 |
| CaO | 23.0 | 21.6 | 35.8 |
| MgO | 2.6 | 2.3 | 1.3 |
| K₂O | 1.0 | 0.9 | 0.8 |
| Na₂O | 0.5 | 0.7 | 0.2 |
| SO₃ | 1.5 | 1.3 | 2.1 |
| P₂O₅ | 0.1 | 0.1 | 0.1 |
| Total | 99.9 | 99.3 | 99.4 |

**Table 1b**

| **QXRD** | **RCP** | **cRCP** | **cRCP_{syn}** |
|---|---|---|---|
| quartz | 26.5 | 27.7 | 11.7 |
| calcite | 10.0 | 26.5 | 55.8 |
| dolomite | | 2.2 | |
| aragonite | | | 0.9 |
| vaterite | | 4.3 | 2.2 |
| amorphous | 34.5 | 25.6 | 24.8 |
| albite | 4.2 | 4.8 | |
| microcline | 3.3 | 2.9 | 1.2 |
| clinker phases | 1.0 | | 1.5 |
| hemicarboaluminate | | | 0.4 |
| hydrotalcite | | 2.5 | 1.3 |
| others | 15.8 | 3.5 | |

The tested activators were potassium silicate solution with a modulus of 1.5, sodium silicate solution with a modulus of 3.2, a dry sodium carbonate, and a sodium hydroxide solution with a concentration of 10 mol/l. For preparation of the building material samples, the source material (or binder) was mixed 30 seconds with the aggregate (sand), then 1 minute with the activator (or water), and the obtained paste was poured into a plastic cup as mould. The dry activator was mixed with the source material in such an amount that 10 % by weight sodium carbonate with respect to the binder were present. Instead of mixing with the activator, those samples were mixed with water. Each sample contained 3 g of binder and 4.5 g of aggregate. The sample compositions are listed in table 2.

**Table 2**

| source material | activator | | | | w/b |
|---|---|---|---|---|---|
| | K₂SiO₃ | Na₂SiO₃ | Na₂CO₃ | NaOH | |
| RCP | 2.3 ml | 2.3 ml | 1.3 ml H₂O | 1.8 ml | 0.425 |
| cRCP | 2.9 ml | 2.9 ml | 1.6 ml H₂O | 2.3 ml | 0.525 |
| cRCP_{syn} | 3.3 ml | 3.3 ml | 1.8 ml H₂O | 2.6 ml | 0.6 |

The samples were cured 24 hours and the hardening assessed by pressing them with a spatula and trying to remove them from the cup. The results are rated as follows and shown in table 4:
+ sample is cured, resists pressure and can be demolded
o sample is cured but does not resist pressure and demolding leaves residues
- sample is still wet, not cured (sandy), does not resist pressure and cannot be demolded.

**Table 4**

| source material | activator | | | |
|---|---|---|---|---|
| | K₂SiO₃ | Na₂SiO₃ | Na₂CO₃ | NaOH |
| RCP | + | o | - | - |
| cRCP | + | - | - | ○ |
| cRCP_{syn} | + | - | - | ○ |

As is apparent from table 4, only activation by potassium silicate with a modulus of 1.5 allowed a substantial curing within 24 hours, allowing a demolding without losses. Silicate with a modulus of 3.2 as activator was unable to achieve sufficient curing for demolding. In spite of the high CaO content of the source material that should allow the use of a moderately alkaline activator, sodium carbonate failed completely. NaOH was able to initiate slight hardening in the alkali activated binders from carbonated recycled concrete paste but not enough and was very brittle (even after 7 days no strength development). -

## Claims

1. Alkali activated binder comprising carbonated recycled concrete paste as silica and alumina source material and an alkali silicate with a molar ratio SiO₂/M₂O with M being an alkali metal ion of up to 2.5 as activator.

2. Alkali activated binder according to claim 1, wherein the activator is sodium silicate, potassium silicate or lithium silicate, preferably potassium silicate.

3. Alkali activated binder according to claim 1 or 2, wherein the modulus of the alkali silicate is ≤ 2.0, preferably ranges from 1.0 to 2.0.

4. Alkali activated binder according to one of claims 1 to 3, wherein the binder comprises from 60 to 99 % by weight carbonated recycled concrete paste and from 1 to 40 % by weight activator, preferably from 65 to 90 % by weight carbonated recycled concrete paste and from 10 to 35 % by weight activator, most preferred from 65 to 80 % by weight carbonated recycled concrete paste and from 20 to 35 % by weight activator.

5. Alkali activated binder according to one of claims 1 to 4, wherein the carbonated recycled concrete paste has a carbonation degree of at least 5 % by weight with respect to the total amount of carbonatable phases, preferably at least 10 % by weight, most preferred at least 15 % by weight.

6. Alkali activated binder according to one of claims 1 to 5, wherein the carbonated recycled concrete paste contains up to 70 % by weight aggregate, preferably up to 50 % by weight, most preferred up to 30 % by weight.

7. Alkali activated binder according to one of claims 1 to 6, wherein the carbonated recycled concrete paste has a particle size distribution measured by laser diffraction spectrometry acc. to ISO 13320 with a d₉₀ < 250 µm, preferably a d₉₀ < 200 µm and most preferred a d₉₀ < 150 µm.

8. Alkali activated binder according to one of claims 1 to 7, wherein the carbonated recycled concrete paste is obtained from a recycled concrete paste which is waste concrete, preferably concrete demolition waste, remains from hydraulically hardening building materials, solids in waste water from cleaning devices for concreting or mixtures thereof, preferably concrete demolition waste.

9. Alkali activated binder according to claim 8, wherein the recycled concrete paste is a fraction from waste concrete with a d₁₀ ≥ 0.1 mm, preferably a d₁₀ ≥ 1 mm, most preferred a d₁₀ ≥ 2 mm, and a d₉₀ ≤ 100 mm, preferably a d₉₀ ≤ 50 mm, most preferred a d₉₀ ≤ 32 mm, especially obtained during demolition of concrete containing structures like buildings and road surfaces from which the foreign materials like wood, metal parts, brick parts, and plastic, have been substantially completely removed.

10. Alkali activated binder according to one of claims 1 to 9, further comprising an additional silica and alumina source, which is preferably one or more of siliceous fly ash; calcareous fly ash; ground granulated blast furnace slag and other slags containing alumina and silica glassy phase; clays, especially kaolinitic clays and metakaolin; silica dust; rice husk ash; trass; and red mud; and/or is preferably contained in an amount of up to 80 % by weight, more preferred up to 50 % by weight, most preferred up to 25 % by weight, with respect to the total amount of silica and alumina source in the alkali activated binder.

11. Alkali activated binder according to one of claims 1 to 9, further containing a filler, preferably calcareous fillers like limestone, dolomite or mixtures thereof or siliceous fillers like quartz powder, sandstone powder, stone dust (porphyry, granite, diabase, gabbro, basalt) or mixtures thereof, preferably in an amount of ≤ 20 % by weight, more preferred ≤ 10 % by weight, most preferred ≤ 5 % by weight, with respect to the total weight of alkali activated binder.

12. Method for manufacturing an alkali activated binder from waste concrete comprising the steps:
providing recycled concrete paste from waste concrete,
carbonating the recycled concrete paste to a carbonation degree of at least 5 % by weight of the carbonatable components, and
mixing the carbonated recycled concrete paste as silica and alumina source material with an alkali silicate with a modulus of up to 2.5 as activator to provide the alkali activated binder.

13. Method according to claim 12, wherein the recycled concrete paste is carbonated to a carbonation degree of at least 10 % by weight of the carbonatable components, preferably of at least 15 % by weight of the carbonatable components.

14. Method according to claim 12 or 13, wherein sodium silicate, potassium silicate or lithium silicate, preferably potassium silicate, and/or an alkali silicate with the modulus ≤ 2.0, preferably from 1.0 to 2.0, is used as the activator.

15. Method according to one of claims 12 to 14, wherein concrete demolition waste, remains from hydraulically hardening building materials, solids in waste water from cleaning devices for concreting or mixtures thereof is/are used as waste concrete.

16. Use of an alkali activated binder, especially according to one of claims 1 to 10 or obtainable according to one of claims 12 to 15, comprising carbonated recycled concrete paste as silica and alumina source material and an alkali silicate with a modulus of up to 2.5 as activator for manufacturing building materials.

17. Use according to claim 16, wherein the building material is concrete or mortar or a construction chemical product like tile adhesive or screed, preferably concrete or mortar.
